**Europäisches Patentamt**

**European Patent Office**

**Office européen des brevets**

(11) Veröffentlichungsnummer: **0 101 858**
**A2**

(12) ## EUROPÄISCHE PATENTANMELDUNG

(21) Anmeldenummer: **83106854.9**

(22) Anmeldetag: **13.07.83**

(51) Int. Cl.³: **G 01 B 5/00**

(30) Priorität: **21.08.82 DE 3231160**

(43) Veröffentlichungstag der Anmeldung:
**07.03.84 Patentblatt 84/10**

(84) Benannte Vertragsstaaten:
**AT CH DE FR GB IT LI NL SE**

(71) Anmelder: **Dr. Johannes Heidenhain GmbH**
**Nansenstrasse 17**
**D-8225 Traunreut(DE)**

(72) Erfinder: **Ernst, Alfons, Dipl.-Ing.**
**Traunring 62**
**D-8225 Traunreut(DE)**

(54) **Mehrkoordinaten-Tastkopf.**

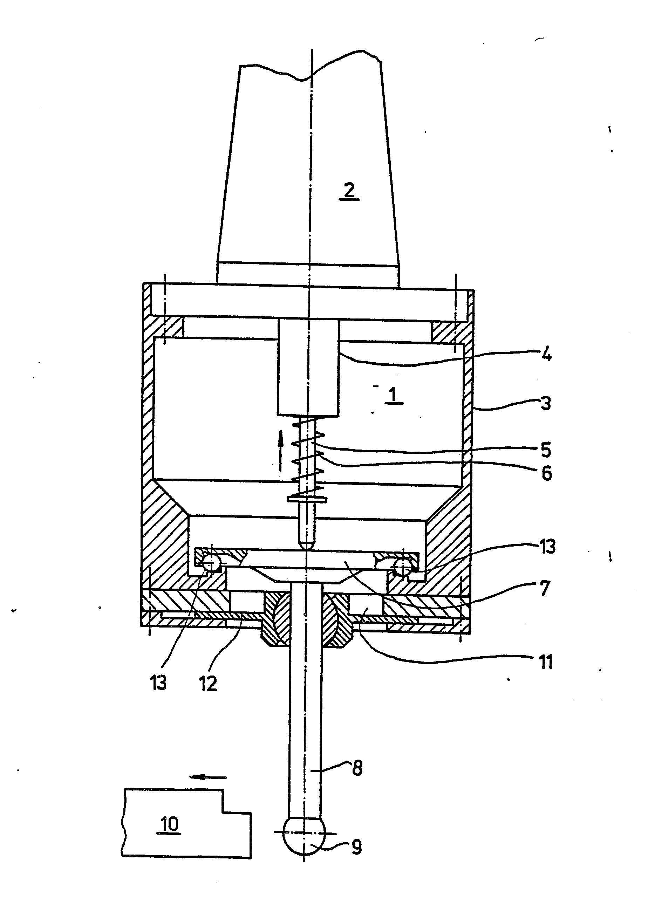

(57) Bei deisem Mehrkoordinaten-Tastkopf (1) ist der Taststift (8) im Innern des Tastkopfgehäuses (3) an einem Flansch (7) befestigt. Der Flansch (7) liegt auf präzisen Lagerkugeln (13) auf, die gleichmäßig über den Umfang der Taststiftdurchtrittsöffnung (11) verteilt sind, die sich am Boden des Tastkopfgehäuses (3) befindet. Ein Ansatz am Flansch (7) umgreift die Lagerkugeln (13) und verhindert ein radiales Verschieben des Taststiftes (8). In der Ruhelage – in die der Taststift (8) durch die Wirkung der Feder (6) mit Hilfe des Meßwertaufnehmers (5) gedrückt wird – befindet sich die Antastkugel (9) immer in einer durch den Tastkopfaufbau genau bestimmten Lage. Bei Auslenkung des Taststiftes (8) kippt der Flansch (7) und bewegt den Meßwertaufnehmer (5) dadurch axial, so daß vom Meßwertumformer (4) ein Taststiftauslenksignal erzeugt wird (Figur 1).

EP 0 101 858 A2

- 1 -

DR. JOHANNES HEIDENHAIN GMBH          9. August 1982


Mehrkoordinaten-Tastkopf
=========================

Die Erfindung bezieht sich auf einen Mehrkoordinaten-Tastkopf gemäß dem Oberbegriff des Anspruches 1.

Es ist eine große Anzahl von Tastköpfen bekannt, die überwiegend für den Einsatz an Mehrkoordinatenmeß- oder Bearbeitungsmaschinen eingesetzt werden. So ist beispielsweise in der DE-PS 28 03 398 ein Tastkopf beschrieben, der über Reibungsfedern vorgespannt ist, so daß der Tastarm solange in seiner Ruhelage verbleibt, bis ein vorab eingestellter Grenzwert überschritten wird. In der dortigen Figur 5 wird auch eine Schwenklagerung für einen Tastkopf gezeigt, die durch ringförmig angeordnete kugelige Lagerkörper im Zusammenwirken mit zylindrischen Lagerkörpern eine zwangsschlüssige winkelmäßige Positionierung des Tastkopfgehäuses nach Art einer Rasterung bewirkt.

Ferner ist aus der Veröffentlichung WO81/01876 der PCT-Anmeldung PCT/SU79/00134 vom 26.12.1979 ein Tastkopf bekannt, der nach dem Resonanz-Berührungs-Prinzip arbeitet. Dort weist der winkelbewegliche Taststift einen Flansch auf, der sich auf einem Ansatz abstützt, der am Boden des Taststiftgehäuses die Taststiftdurchtrittsöffnung umgibt. Auf der Oberseite des Flansches, dem freien Taststiftende entgegengesetzt, ist der piezoelektrische Konverter angebracht, der den Taststift in Schwingungen versetzt. Bei Werkstückberührung verändert sich die Resonanzfrequenz und diese Änderung wird von einem Schaltkreis ausgewertet.

Ferner ist ein Tastkopf bekannt, der die Auslenkung des Taststiftes mit zug- oder druckempfindlichen Elementen registriert (DE-PS 27 12 181).

Aus der GB-PS 1 599 758 ist es außerdem bekannt, die Taststiftaustrittsöffnung des Tastkopfgehäuses mittels eines Gummibalges gegenüber äußeren Einflüssen abzudichten.

Diese Tastköpfe sind zum Teil mechanisch sehr kompliziert aufgebaut, oder die Reproduzierbarkeit des Taststiftauslenksignales läßt zu wünschen übrig.

Es ist daher Aufgabe der Erfindung, einen mechanisch einfach aufgebauten Tastkopf zu schaffen, der eine gute Reproduzierbarkeit des Taststiftauslenksignales ermöglicht, preisgünstig herstellbar und der unempfindlich gegen rauhe Behandlung im Betrieb ist.

Diese Aufgabe wird durch die im Kennzeichen des Anspruches 1 angegebenen Merkmale gelöst.

- 3 -

Die Vorteile des erfindungsgemäßen Tastkopfes sind sein umkomplizierter und damit kostengünstiger Aufbau, bei dem im weitest möglichen Umfang frei käufliche Bauteile verwendet werden können, seiner darauf beruhenden Robustheit und seiner guten Wiederholgenauigkeit bei der Auslösung des Taststiftauslenksignales.

Mit Hilfe der Zeichnung soll anhand eines Ausführungsbeispiels die Erfindung noch näher erläutert werden.

Die Figur zeigt eine Tastkopf 1 mit einem Einspanndorn 2 zur Aufnahme des Tastkopfes 1 in der Spindel einer nicht dargestellten Meß- oder Bearbeitungsmaschine. Innerhalb eines Tastkopfgehäuses 3 befindet sich ein Meßumformer 4, dessen axial beweglicher Meßwertaufnehmer 5 unter der Wirkung einer Feder 6 im Zentrum eines Flansches 7 anliegt. Der Flansch 7 bildet im Innern des Tastkopfgehäuses 3 den Abschluß eines in mehreren Richtungen auslenkbaren Taststiftes 8, an dessen freiem Ende sich eine Antastkugel 9 zum Antasten eines Werkstückes 10 befindet. Das Tastkopfgehäuse 3 weist eine Taststiftdurchtrittsöffnung 11 auf, durch die das freie Ende des Taststiftes 8 aus dem Tastkopfgehäuse 3 herausragt. Diese Taststiftdurchtrittsöffnung 11 ist mit einer Abdeckung 12 versehen, die das Innere des Tastkopfgehäuses 3 gegenüber äußeren Einflüssen schützt.

Beim Antasten des Werkstückes 10 wird der Taststift 8 ausgelenkt, dadurch kippt der Flansch 7 und wälzt sich über eine oder zwei Kugeln 13 ab.

- 4 -

Die Kugeln 13 sind in ausreichender Anzahl gleichmäßig über den Umfang der Taststiftaustrittsöffnung 11 angeordnet und dort in geeigneter Weise
befestigt z. B. gekittet. Die Kugeln 13 sind preisgünstige Bauelemente mit hoher Oberflächenqualität
und hoher Härte, und können so befestigt bzw. gekittet werden, daß sie am Flansch 7 spielfrei anliegen. Auf diese Weise wird eine exakte und jederzeit reproduzierbare Nullstellung der Antastkugel 9
am Ende des Taststiftes 8 gewährleistet. Der im
Zentrum des Flansches 7 angreifende Meßwertaufnehmer 5 wird beim Kippen des Flansches 7 axial
bewegt und beaufschlagt den Meßumformer 4, der je
nach Bauart ein Signal abgibt, das entweder als
Impuls die Auslenkung des Taststiftes 8 signalisiert, oder aber einen der Taststiftauslenkung
proportionalen Meßwert liefert.

- 5 -

Anspruch
========

1. Mehrkoordinaten-Tastkopf mit einem in definierter Nullage in einem Taststiftgehäuse gelagerten, in mehrere Richtungen auslenkbaren Taststift und einer Baueinheit zur Erfassung der Taststiftauslenkung, sowie mit einer vom Taststift durchragten Schutzvorrichtung zur Abdeckung der Taststiftdurchtrittsöffnung, dadurch gekennzeichnet, daß der Taststift (8) an seinem im Innern des Taststiftgehäuses (3) befindlichen Ende einen Flansch (7) aufweist, der eine Anzahl von Lagerkugeln (13) umgreift, die am Boden des Taststiftgehäuses (3) gleichmäßig über den Umfang der Taststiftdurchtrittsöffnung (11) verteilt sind, und daß die Baueinheit (4) zur Erfassung der Taststiftauslenkung einen Meßwertaufnehmer (5) aufweist, der im Zentrum des Flansches (7) angreift.